# EUROPEAN PATENT APPLICATION

(11) **EP 4 810 243 A1**
(43) Date of publication of application: **23.09.2026**
(21) Application number: 26159303.2
(22) Date of filing: 18.02.2026
(51) Int. Cl.: B32B 5/02, B32B 5/18, B32B 5/24, B32B 7/09, B32B 27/06, B32B 27/12

(54) **POLYMERIC COMPOSITE STRUCTURE WITH ELECTROMAGNETIC SHIELDING PROPERTIES**

(30) Priority: 21.03.2025 TR 2025003437
(71) Applicant: Telateks Tekstil Ürünleri Sanayi ve Ticaret Anonim Sirketi, 34956 Istanbul (TR)
(72) Inventor: PARLAKKAYA, Fehmi, 45030 MANISA (TR); AYGUN, Berk, 34785 ISTANBUL (TR)
(74) Representative: Yamankaradeniz, Kemal

(57) **Abstract**

The invention relates to a polymeric composite structure with electromagnetic shielding properties, developed for use in sectors requiring EMI shielding. The invention relates to a lightweight, durable, and functional EMI polymeric composite structure using textile materials with electromagnetic shielding (EMI) properties as the outer layer.

## Description

### Technical Field

The invention relates to a polymeric composite structure with electromagnetic shielding properties for use in industries requiring EMI shielding, such as automotive, aviation, and transportation.

The invention relates to a lightweight, durable, and functional EMI polymeric composite structure using textile materials with electromagnetic shielding (EMI) properties as the outer layer.

### State of Art

Today, electronic devices used in homes, AC motors in electric kitchen appliances, office equipment used in workplaces, communication devices used for communication, and all kinds of digital circuits cause the emission of energy in various frequency ranges into their surroundings. In particular, widely used appliances and systems such as mobile phones, computers, hair dryers, microwave ovens, televisions, irons, air conditioners and electric heaters, photocopiers, automobiles, high-voltage power lines, base stations, electronic communication networks, radio and television transmitters, satellite communication systems, military defense systems, radars, automobile ignition systems, medical devices, and many more electrical and electronic devices and systems intentionally or unintentionally emit electromagnetic radiation while operating. Radiation across various frequency ranges can disrupt the efficiency of electronic devices and also have negative effects on plants, animals, and humans. While these devices, which have become integrated into every aspect of our lives, make our lives easier, they also bring with them the problem of electromagnetic pollution, known as electromog. Reducing the harm caused by electromagnetic radiation that surrounds us has become extremely important for both the environment and human health. Typical metal products currently known for their effectiveness in electromagnetic shielding are not suitable for all applications due to their high cost, weight, thermal expansion, and inflexibility.

There are examples of applications materials with electromagnetic (EM) shielding properties in a textile structure are added between layers to impart EM shielding to the surface of fiber-reinforced multilayer polymeric composites during their production. In this method, EM shielding textile material must be used on the top surface of the composite structure in order to exhibit its shielding properties. Since the textile is the outermost layer, it is susceptible to damage from wear and friction during production processes. Therefore, this reveals the need to use at least one more layer of fabric reinforcement fiber to prevent damage to the EM textile. Felt or woven glass fiber fabric, used as reinforcing fiber, is bonded to the EM textile by impregnating it with resin using a brush. The EM shielding metals in the EM textile's structure prevent resin flow to the fiber layers in the substrates; therefore, the EM shielding fabric cannot properly bond with the fibers above and below it within the composite structure. Because the adhesion cannot be properly established, separation occurs between the layers of the composite structure, making the product unusable. Therefore, there is a need for a durable and functional EMI polymeric composite structure that eliminates these problems in the current state of the art, reduces costs, and has simpler production stages.

In the research carried out in the literature, application numbered US2012090887A1 can be cited as an example of the known state of the art. The said document relates to an electromagnetic shielding material consisting of a composite of numerous copper foils bonded together in a longitudinal direction. The aforementioned composite consists of a laminated copper foil and a resin film, where the main components are bonded together with an epoxy-based adhesive containing an epoxy resin and one or more flexibility-providing resins selected from a group consisting of nitrile butadiene rubber, natural rubber, styrene butadiene rubber, or butadiene rubber. However, the document does not mention an EMI polymeric composite structure in which textile materials with electromagnetic shielding (EMI) properties are used as the outer layer.

Consequently, due to the aforementioned problems and the inadequacy of existing solutions, an improvement in the relevant technical field has become necessary.

### Brief Description of the Invention

The invention relates to a polymeric composite structure with electromagnetic shielding properties that meets the aforementioned requirements, eliminates all disadvantages, and brings some additional advantages.

The primary purpose of this invention is to provide a method for preventing interlayer separation in a composite structure by preventing the EMI shielding textile from separating from other fiber layers in the composite structure.

The purpose of the invention is to provide a lightweight, durable, and functional EMI polymeric composite structure using textile materials with electromagnetic shielding (EMI) properties as the outer layer.

Another purpose of the invention is to provide a composite structure in which interlayer separation is prevented and integrity is preserved. The invention aims to enhance the integrity of the composite structure and prevent interlayer separation by allowing the resin to pass through the holes created when EMI textile material and reinforcement fabrics are sewn together.

In order to achieve the purposes described above, the invention is a polymeric composite structure with electromagnetic shielding properties, wherein; it comprises:
- first and second fiber layers and
- a layer comprising EM shielding fabric and multi-directional carbon reinforcement fabric stitched (sewn) together.

An embodiment of the invention comprises the following layer, respectively:
- a first fiber layer,
- a layer comprising EM shielding fabric and multi-directional carbon reinforcement fabric stitched together,
- a multi-directional carbon reinforced fabric layer,
- a thermoplastic foam layer,
- a multi-directional carbon reinforced fabric layer,
- a layer comprising EM shielding fabric and multi-directional carbon reinforcement fabric stitched together,
- a second fiber layer.

In order to achieve the purposes described above, the invention is a method for obtaining a polymeric composite structure with electromagnetic shielding properties, involving the step of forming the layer by stitching together EM shielding fabric and multi-directional carbon reinforced fabric with polymer yarns.

The structural and characteristic features and all the advantages of the invention will be more clearly understood through the figures given below and the detailed description written with references to these figures; therefore, the evaluation needs to be made taking these figures and detailed description into account.

### Figures to Help Understanding the Invention

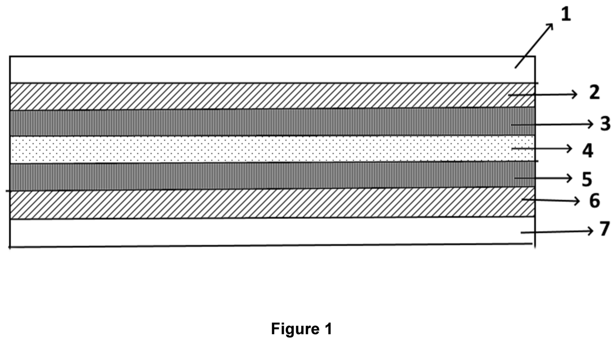

**Figure 1****:** A representative view of an application of the polymeric composite structure, which is the subject of the invention.

### Description of References

**1.** Glass fiber felt layer
**2.** EMI textile material layer
**3.** CQ 400 fabric layer
**4.** PVC foam layer
**5.** CQ 400 fabric layer
**6.** EMI textile material layer
**7.** Glass fiber felt layer

### Detailed Description of the Invention

In this detailed description of the invention, a product and a method are described only for the purpose of facilitating a better understanding of the subject matter and does not form any limiting effects.

The invention relates to a polymeric composite structure with electromagnetic shielding properties, comprising a first fiber layer, a second fiber layer, and a layer comprising interwoven EM shielding fabric and multi-directional carbon reinforcement fabric.

The composite structure, which is the subject of this invention, additionally comprise, preferably, a multi-directional carbon reinforcement layer. This multi-directional carbon reinforcement fabric is preferably CQ400 (400 g/m2 carbon) carbon fabric.

The first and second fiber layers within the composite structure, which are the subject of this invention, are preferably glass fiber felt layers.

In one embodiment of the inventive composite structure, comprises a thermoplastic foam layer. This thermoplastic foam layer may be a PVC foam layer or a PET or PU layer.

In one embodiment of the inventive composite structure, comprises a first fiber layer, a layer comprising interlocking EM shielding fabric and multi-directional carbon reinforcement fabric, a multi-directional carbon reinforcement fabric layer, a thermoplastic foam layer, a multi-directional carbon reinforcement fabric layer, a layer comprising interlocking EM shielding fabric and multi-directional carbon reinforcement fabric, and a second fiber layer, respectively.

In the inventive composite structure, the layer comprising EM shielding fabric and multi-directional carbon reinforcement fabric (preferably CQ 400 carbon fabric) stitched together; the EM fabric provides shielding while the multi-directional carbon reinforcement enhances mechanical properties/strength.

The first and the second fiber layers (preferably glass fiber felt layers) within the inventive composite structure prevent EMI damage to the textile material layers. The thermoplastic foam layer provides lightness and increases impact resistance.

In an example application shown in Figure 1, the composite structure consists of the following layers: glass fiber felt layer (1), EMI textile material layer (2) comprising stitched EM shielding fabric and CQ 400 carbon fabric, CQ 400 carbon fabric layer (3), PVC foam (4), CQ 400 carbon fabric layer (5), EMI textile material layer (6) comprising stitched EM shielding fabric and CQ 400 carbon fabric, glass fiber felt layer (7).

The composite structure, which is the subject of the invention, comprises a layer of EM shielding fabric and a multi-directional carbon reinforcement fabric stitched together with polymer yarns.

The method of obtaining the polymeric composite structure and having the property of electromagnetic shielding, which is the subject of the invention, comprises the process step of stitching EM shielding fabric and multi-directional carbon reinforced fabric together with polymer yarns to obtain the EMI layer. The method of the invention comprises combining (preferably by lamination) the layer comprising the stitched EM shielding fabric and multi-directional carbon reinforcement fabric with first and second fiber layers.

An application of the method, which is the subject of the invention, comprises the following process steps:
i. Obtaining the EMI layer by stitching EM shielding fabric and multi-directional carbon reinforcement fabric together with polymer yarns,
ii. Laminating the following layers sequentially stacked on top of each other using the vacuum infusion method; a first fiber layer, a layer comprising EM shielding fabric and multi-directional carbon reinforcement fabric stitched together, a multi-directional carbon reinforcement fabric layer, a thermoplastic foam layer, a multi-directional carbon reinforcement fabric layer, a layer comprising EM shielding fabric and multi-directional carbon reinforcement fabric stitched together, and a second fiber layer.

Typical metal products known for their effectiveness in current electromagnetic shielding technology are not suitable for all applications due to their high cost, weight, thermal expansion, and inflexibility. Therefore, in this invention, materials with electromagnetic shielding properties were transformed into a textile structure, enabling the development of lightweight and functional EM shielding materials. With this invention, EM textile materials can be incorporated as an outer layer into composite structures where polymeric composite materials are used in all areas requiring EM shielding (e.g., exterior surfaces of vehicles in the automotive, aviation, and other transportation sectors), thus adding EM shielding properties to the part. Our invention enables the production of a polymeric composite part with electromagnetic shielding properties by employing a method that improves the quality of the composite part.

The polymeric composite structure, which is the subject of the invention, comprises a layer comprising inter-stitched EM shielding fabric and a multi-directional carbon reinforcement fabric positioned between the first and second fiber layers and a bonding method is presented that prevents interlayer separation, achieved by integrating EMI textile material into the composite structure using a stitching technique together with reinforcement fabric during the production process. Here, the stitch pattern and density between the EMI textile material and the reinforcement fabric are determined according to the properties of the EMI textile material. In the production of composite structures, the holes created during stitching allow the resin to pass through to the substrates, increasing the integrity of the composite structure and preventing separation between layers.

## Claims

1. A polymeric composite structure with electromagnetic shielding properties; ***characterized by comprising*:**
• a first and a second fiber layer
• a layer comprising EM shielding fabric and multi-directional carbon reinforcement fabric stitched together.

2. The composite structure according to to claim 1, ***characterized by comprising;*** a multi-directional carbon reinforcement layer.

3. The composite structure according to to claim 1 or 2, ***wherein;*** the multi-directional carbon-reinforced fabric is CQ400 carbon fabric.

4. The composite structure according to to claim 1, ***wherein;*** the first and second fiber layers are glass fiber felt layers.

5. The composite structure according to to claim 1, ***characterized by comprising** a* thermoplastic foam layer.

6. The composite structure according to to claim 1, ***wherein;*** the thermoplastic foam layer is a PVC foam layer.

7. The composite structure according to to claim 1, ***characterized by comprising*** a layer comprising EM shielding fabric and multi-directional carbon reinforcement fabric stitched together with polymer yarns.

8. The composite structure according to to claim 1, ***characterized by comprising*** the following layer, respectively:
• a first fiber layer,
• a layer comprising EM shielding fabric and multi-directional carbon reinforcement fabric stitched together,
• a multi-directional carbon reinforced fabric layer,
• a thermoplastic foam layer,
• a multi-directional carbon reinforced fabric layer,
• a layer comprising EM shielding fabric and multi-directional carbon reinforcement fabric stitched together,
• a second fiber layer.

9. A method for obtaining a polymeric composite structure with electromagnetic shielding properties, ***characterized by comprising*** forming a layer by stitching together an EM shielding fabric and a multi-directional carbon reinforcement fabric using polymer yarns.

10. The method according to claim 9, ***wherein;*** the formed layer comprising stitched EM shielding fabric and multi-directional carbon reinforcement fabric is combined with first and second fiber layers.
